# EUROPEAN PATENT APPLICATION

(11) **EP 4 159 435 A1**
(43) Date of publication of application: **05.04.2023**
(21) Application number: 21860834.7
(22) Date of filing: 19.03.2021
(51) Int. Cl.: B32B 27/00, H01M 4/86, H01M 4/88, H01M 8/10, H01M 8/1004, H01M 8/1018, H01M 8/1039

(54) **LAYERED FILM AND PRODUCTION METHOD THEREFOR, AND FUEL BATTERY PRODUCTION METHOD**

(30) Priority: 26.08.2020 JP 2020142648
(71) Applicant: Daicel Corporation, Osaka 530-0011 (JP)
(72) Inventor: OKADA Kazuyuki, Tokyo 108-8230 (JP); NISHIMURA Kanae, Tokyo 108-8230 (JP); SHINMURA Takumi, Tokyo 108-8230 (JP)
(74) Representative: Grünecker Patent- und Rechtsanwälte PartG mbB
(86) International application number: PCT/JP2021/011322
(87) International publication number: WO 2022/044402

(57) **Abstract**

A layered film is prepared by layering a substrate layer, a first layer containing an acid-modified olefin-based resin, a second layer containing a cyclic olefin-based resin, and an ion-exchange resin-containing layer containing an ion-exchange resin in this order. Each of the second layer and the first layer may be a layer formed by coating. The average thickness of the second layer may be 30 µm or less. A membrane electrode assembly of a solid polymer-type fuel battery may be produced by releasing a layer other than the ion-exchange resin-containing layer from the layered film. The layered film does not contain a component having a large environmental load even when the release layer is formed of the cyclic olefin-based resin, firmly attaches to a substrate, and can be released smoothly from the ion-exchange resin-containing layer serving as a transfer medium.

## Description

### Technical Field

The present disclosure relates to a layered film that can be used during production (membrane formation) of, for example, a membrane electrode assembly which is a constituent member of a solid polymer-type fuel battery, a production method therefor, and a method for producing the membrane electrode assembly by using the layered film.

### Background Art

In a solid polymer-type fuel battery or a hydrogen feeder, a platinum catalyst or a platinum-supported carbon is used as a catalyst, and to obtain a smooth catalyst layer, methods of applying, drying, and transferring a catalyst ink on a release film have been known.

Specifically, a solid polymer-type fuel battery includes a basic structure called a membrane electrode assembly (MEA). The MEA is produced by: layering electrode membranes (catalyst layer or electrode catalyst membrane) containing, as a main component, carbon powder serving as a support for a platinum group metal catalyst on both faces of a solid polymer electrolyte membrane which is an ion-exchange membrane; and further sandwiching the layered membranes with an air feeder layer and a fuel gas feeder layer which is an electrically conductive porous membrane. In this MEA, both the electrolyte membrane and the electrode membranes include an ion-exchange resin, and the electrolyte membrane and the electrode membranes are formed by a casting method and/or a coating method. The layering method of the electrolyte membrane and the electrode membranes typically includes: bringing the both layers, each formed on a separate support, into contact with each other; subjecting the layers to thermal pressure boding at a temperature of approximately 130 to 150°C (depending on the used material, approximately 150 to 200°C) at a pressure of approximately 1 to 10 MPa to tightly bond the layers; and then releasing the supports.

Thus, a release film is used as a support; however, in a case where an electrolyte membrane and electrode membranes are formed on release films by casting (coating), it is difficult to achieve coatability (coating suitability), that is, an ability to coat a layer in a uniform thickness on the release film, and releasability (release property), that is, an ability to easily release the supports from the electrolyte membrane and the electrode membranes after usage, in a compatible manner. In general, a coating liquid having high wettability to a release film and high coatability tends to have lower releasability due to high adhesiveness. In particular, because an electrode membrane contains a large amount of catalyst particles, depending on the ratio of the catalyst particles to a binder forming the electrode membrane, releasing of the electrode membrane tends to result in cohesive failure and tend to leave the electrode membrane on the release film. Furthermore, an electrolyte membrane and an electrode membrane are typically dispersed in a water-based solvent; however, because a release film has high releasability and tends to repel the water-based solvent (having low wettability), the formation of the electrolyte membrane and the electrode membrane each having a uniform thickness by casting (coating) on the surface of the release film is difficult.

Furthermore, a release film is required to have adequate adhesiveness to an electrolyte membrane and an electrode membrane and, specifically, required to have adhesiveness to a degree that does not cause peeling off in a process after formation of the electrolyte membrane and the electrode membrane (e.g., transport process).

Furthermore, a release film is often layered with a substrate film having high mechanical characteristics during use to improve handling and productivity; however, it is relatively difficult for a release film having excellent releasability from an electrolyte membrane and an electrode membrane to have an improved adhesiveness to a general purpose substrate film having no reactive groups and the like. Thus, in the process of forming an electrolyte membrane and electrode membranes (especially, in a process of releasing a release film after both the electrolyte membrane and the electrode membranes have been subjected to thermal bonding), at least a part (releasing agent) of the release film is readily transferred to the electrolyte membrane and/or the electrode membranes. Furthermore, a release film for producing a fuel battery is required to have heat resistance in the production process and is also required to have flexibility from the perspective of productivity because production employs a roll-to-roll method.

As the release film, in general, fluorine-based films are widely used; however, although the fluorine-based films have excellent heat resistance, releasability, and contamination resistance, they are expensive and do not readily combust in incineration disposal treatment after usage, and tend to generate a toxic gas. Furthermore, because of low modulus of elasticity, they may become wavy due to drying or heating at the time of transferring, and thus they may require pretreatment before use and/or production by a roll-to-roll method may be difficult.

Thus, because a release film used in production of a membrane electrode assembly of a solid polymer-type fuel battery is required to satisfy various conditions, selection of a release film to be used has been difficult. In particular, because the release film needs to satisfy the conflicting characteristics, namely, releasability and coatability, use of a general purpose release film has been difficult; however, as a release film that may be used in place of a fluorine-based film, a release film formed of a cyclic olefin-based resin has been proposed.

JP 2010-234570 A (Patent Document 1) describes a laminate including a release film made of a cycloolefinic copolymer, and a layer containing an ion-exchange resin laminated on the release film. As the release film, a release film produced by melt-extrusion molding a cycloolefinic copolymer into a film form and a release film formed by coating a cycloolefinic copolymer solution on a film, such as a polyethylene terephthalate (PET) film as a base film are described. Furthermore, in Examples, a release film having a thickness of 0.5 µm is formed by casting a solution containing a copolymer of ethylene and norbornene on a PET film using a flow-casting apparatus.

JP 5300240 B (Patent Document 2) describes a layered film including a first layer layered on a plastic substrate and containing a chlorine-containing resin, and a second layer layered on this first layer and containing a cyclic olefin-based resin. In this document, adhesiveness between the plastic substrate and the second layer is improved by providing the first layer containing the chlorine-containing resin in between the plastic substrate and the second layer.

### Citation List

### Patent Document

Patent Document 1: JP 2010-234570 A
Patent Document 2: JP 5300240 B

### Summary of Invention

### Technical Problem

However, even the release film of Patent Document 1 does not have sufficient releasability with regard to an electrolyte membrane and an electrode membrane. In particular, a cyclic olefin-based resin does not easily attach or adhere to a resin of a substrate tightly because the cyclic olefin-based resin has a low surface energy similar to fluorine resins, and the cyclic olefin-based resin may be transferred to an electrolyte membrane and/or electrode membranes in production process of the electrolyte membrane and the electrode membranes (especially, in a process of releasing a release film after both the electrolyte membrane and the electrode membranes are heated and bonded). Furthermore, to reduce a thickness of a release layer formed of a cyclic olefin-based resin, production by a molding method, in which extrusion molding and stretching treatment are combined, is not adequate, and a casting method by coating has to be employed. However, to form a release layer having high adhesiveness by a casting method, a surface of a target object to be adhered needs to be solid. Thus, in a case where the release layer is formed by a cyclic olefin-based resin by coating, even if an adhesive resin is used on an adhesion surface, the adhesiveness decreases due to solidification before contact, and production of a layered material having high adhesiveness is difficult. As described above, it is even more difficult because the release layer formed by the cyclic olefin-based resin is a layer that is hard to enhance adhesiveness due to its own required functions.

Meanwhile, a layered film of Patent Document 2 is a rare example, in which adhesiveness of a layer formed of a cyclic olefin-based resin is improved by using a chlorine-containing resin; however, because this layered film contains toxic halogens, environmental load is large.

Thus, an object of the present disclosure is to provide a layered film that does not contain a component having a large environmental load even when a release layer is formed of a cyclic olefin-based resin, that firmly attaches to a substrate, and that can be released smoothly from an ion-exchange resin-containing layer which is a transfer medium, a production method therefor, and a method for producing the membrane electrode assembly by using the layered film.

Another object of the present disclosure is to provide a layered film that has improved releasability from an ion-exchange resin-containing layer even when a release layer is thin, that has excellent ease of handling, and that can produce a membrane electrode assembly (electrolyte membrane and/or electrode membrane) of a solid polymer-type fuel battery in high productivity by a roll-to-roll method, a production method therefor, and a method for producing the membrane electrode assembly by using the layered film.

### Solution to Problem

To achieve the objects described above, the inventors of the present invention found that, by layering a substrate layer, a first layer containing an acid-modified olefin-based resin, a second layer containing a cyclic olefin-based resin, and an ion-exchange resin-containing layer containing an ion-exchange resin in this order, even when the second layer serving as a release layer contains a cyclic olefin-based resin, firm attachment to a substrate is ensured and smooth release from the ion-exchange resin-containing layer as a transfer medium can be achieved without using a component with a large environmental load, and thus completed the present invention.

That is, the layered film of the present disclosure includes a substrate layer, a first layer containing an acid-modified olefin-based resin, a second layer containing a cyclic olefin-based resin, and an ion-exchange resin-containing layer containing an ion-exchange resin layered in this order. The acid-modified olefin-based resin may be an acid-modified polyethylene-based resin. The cyclic olefin-based resin may be a copolymer of a cyclic olefin and a linear olefin. An average thickness of the second layer may be 30 µm or less. The substrate layer may contain at least one type selected from the group consisting of a polyolefin, polyvinyl alcohol-based polymer, polyester, polyamide, polyimide, and cellulose derivative. The first layer may further contain a basic compound. The ion-exchange resin may be a fluorine resin having a sulfonic acid group or a salt thereof in a side chain. The ion-exchange resin-containing layer may be an electrolyte membrane and/or an electrode membrane.

The present disclosure also include a method for producing the layered film including: forming a first layer, the forming the first layer including coating a liquid composition for the first layer on a substrate layer to form an intermediate layer, the liquid composition containing an acid-modified olefin-based resin;
forming a second layer, the forming the second layer including coating a liquid composition for the second layer on the coated first layer to form the second layer, the liquid composition containing a cyclic olefin-based resin; and
forming an ion-exchange resin-containing layer, the forming the ion-exchange resin-containing layer including layering the ion-exchange resin-containing layer on the coated second layer. The liquid composition for a first layer may be an aqueous emulsion. This production method may be performed by a roll-to-roll method.

The present disclosure also include a method for producing a membrane electrode assembly of a solid polymer-type fuel battery, the method comprising releasing a layer other than an ion-exchange resin-containing layer from the layered film described above.

### Advantageous Effects of Invention

In the present disclosure, because a substrate layer, a first layer containing an acid-modified olefin-based resin, a second layer containing a cyclic olefin-based resin, and an ion-exchange resin-containing layer containing an ion-exchange resin are layered in this order, even when the second layer as a release layer contains a cyclic olefin-based resin, firm attachment to a substrate is ensured and smooth release from the ion-exchange resin-containing layer as a transfer medium can be achieved without using a component with a large environmental load. In particular, when the ion-exchange resin-containing layer is released from the release layer, transfer of at least a part of the release layer on the ion-exchange resin-containing layer can be suppressed. Furthermore, the releasability from the ion-exchange resin-containing layer can be improved, and ease of handling is excellent. Therefore, when the layered film is used as a release film for production of a membrane electrode assembly (electrolyte membrane and/or electrode membranes) of a solid polymer-type fuel battery, transfer of a releasing agent to the membrane electrode assembly side can be suppressed. Furthermore, a membrane electrode assembly (electrolyte membrane and/or electrode membranes) of a solid polymer-type fuel battery can be produced in high productivity by a roll-to-roll method.

### Description of Embodiments

### Second Layer

The layered film of the present disclosure contains a second layer as a release layer. The second layer contains a cyclic olefin-based resin and has excellent releasability.

The cyclic olefin-based resin contains at least a cyclic olefin unit as a repeating unit. A polymerization component (monomer) that forms a cyclic olefin unit is a polymerizable cyclic olefin having an ethylenic double bond in a ring and can be classified to a monocyclic olefin, bicyclic olefin, and polycyclic olefin having three or more rings.

Examples of the monocyclic olefin include a cyclic C₄₋₁₂ cycloolefin such as cyclobutene, cyclopentene, cycloheptene, and cyclooctene.

Examples of the bicyclic olefins include 2-norbornene; norbornene having a C₁₋₂ alkyl group such as 5-methyl-2-norbornene, 5,5-dimethyl-2-norbornene, and 5-ethyl-2-norbornene; norbornene having an alkenyl group such as 5-ethylidene-2-norbornene; norbornene having an alkoxycarbonyl group such as 5-methoxycarbonyl-2-norbomene, and 5-methyl-5-methoxycarbonyl-2-norbornene; norbornene having a cyano group such as 5-cyano-2-norbornene; norbornene having an aryl group such as 5-phenyl-2-norbornene and 5-phenyl-5-methyl-2-norbornene; octalin; and octalin having a C₁₋₂ alkyl group such as 6-ethyl-octahydronaphthalene.

Examples of the polycyclic olefin include dicyclopentadiene; derivatives such as 2,3-dihydrodicyclopentadiene, methanooctahydrofluorene, dimethanooctahydronaphthalene, dimethanocyclopentadienonaphthalene, and methanooctahydrocyclopentadienonaphthalene; adducts of cyclopentadiene and tetrahydroindene or the like; and a trimer to tetramer of cyclopentadiene.

These cyclic olefins can be used alone or in a combination of two or more. Among these cyclic olefins, from the perspective of excellent balance of releasability and flexibility of the layered film, bicyclic olefins are preferred. A proportion of the bicyclic olefin (especially, norbornene) with respect to the entire cyclic olefin (cyclic olefin that forms a cyclic olefin unit) may be 10 mol% or greater and is, for example, 30 mol% or greater, preferably 50 mol% or greater, and more preferably 80 mol% or greater (particularly, 90 mol% or greater), or bicyclic olefin alone (100 mol%) may be used. In particular, when the proportion of polycyclic olefin having three or more rings is large, use in production by a roll-to-roll method becomes difficult.

Examples of the representative bicyclic olefin include norbornene (2-norbornene) that may have a substituent and octalin (octahydronaphthalene) that may have a substituent. Examples of the substituent include a methyl group, an ethyl group, an alkenyl group, an aryl group, a hydroxyl group, an alkoxy group, a carboxyl group, an alkoxycarbonyl group, an acyl group, a cyano group, an amide group, and a halogen atom. These substituents may be used alone or in combination of two or more thereof. Among these substituents, from the perspective of not impairing releasability of the layered film, nonpolar groups such as a methyl group and an ethyl group are preferred. Among these bicyclic olefins, norbornenes such as norbornene and norbornene having a C₁₋₂ alkyl group (especially, norbornene) are particularly preferred.

The cyclic olefin-based resin contains at least a cyclic olefin unit as a repeating unit; however, from the perspective of adhesiveness to the substrate layer or the intermediate layer, and mechanical characteristics, a cyclic olefin-based copolymer (cycloolefin copolymer) is preferred. The cyclic olefin-based copolymer may be a copolymer having a cyclic olefin unit containing various types of cyclic olefin units and may be a copolymer of a cyclic olefin unit and another copolymerizable unit. Among these copolymers, from the perspective of achieving the adhesiveness and mechanical characteristics in a well-balanced manner, a copolymer of a cyclic olefin unit and another copolymerizable unit is preferred, and a copolymer containing a cyclic olefin unit and a linear olefin unit as repeating units is particularly preferred.

The linear olefin unit may be a linear olefin unit formed by ring-opening of a cyclic olefin; however, from the perspective of ease in controlling the proportions of the cyclic olefin unit and the linear olefin unit, a unit having a linear olefin as a polymerization component is preferred.

Examples of the linear olefin include linear C₂₋₁₂ olefins such as ethylene, propylene, 1-butene, isobutene, 1-pentene, 3-methyl-1-pentene, 4-methyl-1-pentene, 1-hexene, 1-heptene, 1-octene, 1-nonene, 1-decene, 1-undecene, and 1-dodecene. These linear olefins can be used alone or in a combination of two or more. Among these linear olefins, linear C₂₋₁₀ α-olefins are preferred, and linear C₂₋₈ α-olefins are particularly preferred.

A ratio of the cyclic olefin unit to the linear olefin unit (molar ratio) can be selected from, for example, a range of the former/the latter of approximately 1/99 to 99/1, and is from approximately 10/90 to 98/2, preferably 20/80 to 97/3, and more preferably 30/70 to 95/5 (particularly, 40/60 to 90/10). When the proportion of the cyclic olefin unit is too small, heat resistance may deteriorate, and when the proportion is too large, mechanical characteristics tend to deteriorate.

The cyclic olefin-based resin may contain another copolymerizable unit besides the cyclic olefin unit and the linear olefin unit. Examples of the polymerization component that forms the another copolymerizable unit (copolymerizable monomer) include linear C₂₋₃ α-olefins (e.g., ethylene and propylene), vinyl ester monomers (e.g., vinyl acetate and vinyl propionate), diene monomers (e.g., butadiene and isoprene), and (meth)acrylic monomers [e.g., (meth)acrylic acid or derivatives thereof (e.g., (meth)acrylate)]. The copolymerizable monomers can be used alone or in a combination of two or more.

A proportion of the another copolymerizable unit is preferably in a range that does not impair the releasability of the layered film and is, for example, 10 mol% or less, preferably 5 mol% or less, and more preferably 1 mol% or less, with respect to the total of the olefin units (e.g., total of the cyclic olefin unit and the linear olefin unit).

A number average molecular weight of the cyclic olefin-based resin determined by gel permeation chromatography (GPC) (solvent: toluene) based on calibration with polystyrene is, for example, approximately from 10000 to 100000, and preferably from 20000 to 80000. When the molecular weight is too small, membrane formation property tends to decrease, and when the molecular weight is too large, viscosity becomes too high and thus ease of handling tends to decrease.

A glass transition temperature (Tg) of the cyclic olefin-based resin determined by a method in accordance with JIS K7121-1087 is, for example, approximately from 50 to 350°C (e.g., 80 to 330°C), preferably from 100 to 320°C, and more preferably from 120 to 310°C (particularly, 130 to 300°C). When the glass transition temperature is too low, the resin may have poor heat resistance, and may face difficulty in treatment at a high temperature. When the glass transition temperature is too high, production may become difficult. In the present specification and claims, the glass transition temperature can be measured by using a differential scanning calorimeter (DSC). For example, by using a differential scanning calorimeter ("DSC6200", available from SII NanoTechnology Inc.), the glass transition temperature may be determined in accordance with JIS K 7121 at a temperature increase rate of 10°C/min in a nitrogen gas stream.

The cyclic olefin-based resin may be a resin produced by addition polymerization and may be a resin produced by ring-opening polymerization (e.g., ring-opening metathesis polymerization). Furthermore, the polymer produced by ring-opening metathesis polymerization may be a hydrogenated resin that has undergone hydrogenation. As the polymerization method of the cyclic olefin-based resin, for example, a commonly used method, such as ring-opening metathesis polymerization using a metathesis polymerization catalyst, addition polymerization using a Ziegler catalyst, and addition polymerization using a metallocene catalyst (typically, ring-opening metathesis polymerization using a metathesis polymerization catalyst), can be used. As a specific polymerization method, for example, methods described in JP 2004-197442 A, JP 2007-119660 A, JP 2008-255341 A, Macromolecules, 43, 4527(2010), Polyhedron, 24, 1269(2005), J. Appl. Polym. Sci, 128(1), 216(2013), and Polymer Journal, 43, 331(2011) can be used. Furthermore, as the catalyst to be used in polymerization, a commonly used catalyst, such as catalysts synthesized by methods described in Macromolecules, 31, 3184(1988) and Journal of Organometallic Chemistry, 2006, vol. 691, p. 193, can be used.

The second layer (release layer) may further contain an additional resin and/or commonly used additives. Examples of the additional resin include linear olefin-based resins (e.g., polyethylene and polypropylene). As commonly used additives, for example, fillers, lubricants (e.g., wax, fatty acid ester, and fatty acid amide), antistatic agents, surfactants, stabilizers (e.g., antioxidants, heat stabilizers, and light stabilizers), flame retardants, viscosity modifiers, thickeners, and defoaming agents may be contained. Furthermore, in a range that surface smoothness is not impaired, the second layer may contain organic or inorganic particles (particularly, antiblocking agent such as zeolite).

A proportion of the cyclic olefin-based resin in the second layer is, for example, 80 mass% or greater, preferably 90 mass% or greater, and more preferably 95 mass% or greater (e.g., 95 to 100 mass%), and may be 100 mass% (cyclic olefin-based resin alone).

An average thickness of the second layer may be 30 µm or less and may be, for example, approximately from 0.1 to 10 µm (e.g., 0.1 to 5 µm), preferably from 0.15 to 5 µm (e.g., 0.2 to 3 µm), and more preferably from 0.3 to 2 µm (particularly, 0.5 to 1 µm). When the second layer is thin, the second layer can be handled particularly easily and suitable for a roll-to-roll method, and economical efficiency is also improved. Note that the average thickness can be calculated based on an applied amount (solid content weight per unit area) and density of the second layer.

The second layer may have a smooth surface by coating, and for example, arithmetic average roughness (Ra) in accordance with JIS B 0610 of the surface may be 1 µm or less (e.g., 1 nm to 1 µm) and, for example, approximately from 1 to 800 nm, preferably from 1 to 500 nm, and more preferably from 1 to 300 nm (particularly, 1 to 200 nm). When Ra is too large, suitable adhesiveness to an ion-exchange resin-containing layer and adhesiveness to a substrate layer may deteriorate.

The second layer is formed on at least one face side of the substrate layer, and may be formed on one face side of the substrate layer or may be formed on both faces of the substrate layer.

### First Layer

The layered film of the present disclosure includes the first layer, and the first layer is interposed between the second layer and the substrate layer described below and can improve adhesiveness between the layers of the layered film. In the present disclosure, by interposing the first layer, even for a substrate layer having no easily adhesive layer or an substrate layer that has not been surface-treated, the second layer having high releasability can be firmly fixed or adhered to the substrate layer. Thus, because the releasability and stability (adhesiveness between the substrate layer and the second layer) of the first layer itself can be achieved in a highly compatible manner, the first layer exhibits excellent releasability (characteristics that allows easy release as needed and that can suppress releasing when releasing is not necessary) even toward the ion-exchange resin-containing layer containing an ion-exchange resin having a unique structure including a main chain of fluorine resin with high releasability and a side chain containing a sulfonic acid group with low releasability. And in addition, its own stability can be improved. Furthermore, such a first layer contains an acid-modified olefin-based resin as an adhesive component, environmental load is also small.

Examples of the olefin-based resin constituting the acid-modified olefin-based resin include C₂₋₁₂ α-olefin homo- or co-polymers such as ethylene, propylene, butene, and methylpentene-1. Among these, polyethylene-based resins and polypropylene-based resins are preferred.

The polyethylene-based resin is simply an olefin-based resin containing an ethylene unit as a main unit (e.g., unit containing 50 mol% or greater, preferably 80 mol% or greater, and more preferably 90 mol% or greater), and may contain another copolymerizable unit besides the ethylene unit.

Examples of the polymerization component to form another copolymerizable unit (copolymerizable monomer) include linear C₃₋₁₂ α-olefins such as propylene, 1-butene, 1-pentene, 3-methyl-1-pentene, 4-methyl-1-pentene, 1-hexene, and 1-octene; aromatic vinyls such as styrene; aliphatic vinyl ester-based monomers such as vinyl acetate and vinyl propionate; diene-based monomers such as butadiene and isoprene; di-C₁₋₁₀ alkyl maleates such as dimethyl maleate, diethyl maleate, and dibutyl maleate; (meth)acrylates such as C₁₋₁₀ alkyl (meth)acrylates, including methyl (meth)acrylate, ethyl (meth)acrylate, and butyl (meth)acrylate, hydroxy C₁₋₁₀ alkyl (meth)acrylates, and glycidyl (meth)acrylate; amide (meth)acrylate; and (meth)acrylonitrile. These copolymerizable monomers can be used alone or in a combination of two or more. Among these, (meth)acrylates are preferred, and C₁₋₁₂ alkyl acrylates are particularly preferred. A molar ratio of the ethylene unit to the (meth)acrylate unit, in terms of the former/the latter, is approximately from 50/50 to 100/0, preferably from 60/40 to 99/1, and more preferably from 70/30 to 95/5 (particularly, 75/25 to 90/10).

Examples of the polyethylene-based resin include polyethylene, an ethylene-propylene copolymer, ethylene-butene copolymer, ethylene-propylene-butene copolymer, and ethylene-(meth)acrylate copolymer.

The polypropylene-based resin is an olefin-based resin containing a propylene unit as a main unit (e.g., unit containing 50 mol% or greater, preferably 80 mol% or greater, and more preferably 90 mol% or greater), and may contain another copolymerizable unit besides the propylene unit.

As the polymerization component that forms another copolymerizable unit (copolymerizable monomer), among the monomers exemplified as the copolymerizable monomers of the polyethylene-based resin described above, same monomers can be used except that ethylene can be used in place of propylene. Preferred aspect is also the same.

Examples of the polypropylene-based resin include polypropylene, a propylene-ethylene copolymer, propylene-butene copolymer, and propylene-butene-ethylene copolymer.

Among these olefin-based resins, from the perspective of excellent adhesiveness, a polyethylene-based resin is particularly preferred.

The acid-modified olefin-based resin is an olefin-based resin modified with carboxylic acid and, specifically, is an olefin-based resin having a carboxyl group and/or an acid anhydride group. A method of modification by an acid is to introduce a carboxyl group and/or an acid anhydride group into a skeleton of an olefin-based resin and is not particularly limited. From the perspective of mechanical characteristics and the like, a method of introducing a monomer having a carboxyl group and/or an acid anhydride group by copolymerization is preferred. The form of the copolymerization may be random copolymer, block copolymer, and the like. From the perspective of improving adhesiveness between the second layer and the substrate layer, graft copolymerization is preferred.

Examples of the monomer having a carboxyl group and/or an acid anhydride group include unsaturated monocarboxylic acid [e.g., (meth)acrylic acid, crotonic acid, isocrotonic acid, and angelic acid], and unsaturated dicarboxylic acid or acid anhydride thereof [e.g., maleic acid (anhydride), fumaric acid, citraconic acid (anhydride), itaconic acid (anhydride), and mesaconic acid]. These monomers may be used alone or in a combination of two or more. Among these monomers, from the perspective of improving adhesiveness, unsaturated monocarboxylic acid such as (meth)acrylic acid and unsaturated dicarboxylic acid or acid anhydride thereof such as maleic acid (anhydride) are preferred, and maleic anhydride is particularly preferred.

A proportion of the monomer can be selected from a range of approximately 0.01 to 30 parts by mass with respect to 100 parts by mass of the olefin-based resin and is, for example, approximately from 0.1 to 20 parts by mass, preferably from 0.2 to 10 parts by mass, and more preferably from 0.3 to 8 parts by mass (particularly, 0.5 to 5 parts by mass). When the proportion of the monomer is too small, adhesiveness to the substrate layer may deteriorate. On the other hand, when the proportion is too large, adhesiveness to the second layer may deteriorate.

A weight average molecular weight of the acid-modified olefin-based resin determined by gel permeation chromatography (GPC) based on calibration with polystyrene is, for example, approximately from 10000 to 150000, preferably from 30000 to 100000, and more preferably from 40000 to 80000. When the molecular weight is too small, membrane formation may become difficult, and when the molecular weight is too large, viscosity becomes too high and thus ease of handling tends to decrease.

The first layer may further contain another resin component. Examples of such another resin component include thermoplastic resins such as linear olefin resins (e.g., polyethylene and polypropylene), acrylic resins, polyamide-based resins, and polyester-based resins (e.g., thermoplastic copolymer polyester); reactive adhesive components such as isocyanate-based compounds and imino group-containing polymers (e.g., polyethyleneimine); water-soluble polymers such as polyalkylene glycol such as polyethylene glycol and polypropylene glycol; and higher fatty acids such as fatty acid esters (e.g., stearate) and fatty acid amides (e.g., stearic acid amide and ethylene bisstearamide). A proportion of such another resin component may be 30 parts by mass or less with respect to 100 parts by mass of the acid-modified olefin-based resin and is, for example, approximately from 0.5 to 20 parts by mass, preferably from 1 to 15 parts by mass, and more preferably from 3 to 10 parts by mass.

The first layer may further contain a basic compound, and the basic compound and the acid-modified olefin-based resin may form a salt. Examples of the basic compound include ammonia; aliphatic amines such as ethylamine, propylamine, isobutylamine, diethylamine, isobutylamine, and triethylamine; alkanolamines such as monoethanolamine, diethanolamine, dimethylaminoethanol, and triethanolamine; and heterocyclic amines such as morpholine and pyridine. A proportion of the basic compound may be 20 parts by mass or less with respect to 100 parts by mass of the acid-modified olefin-based resin and is, for example, approximately from 0.01 to 10 parts by mass, preferably from 0.05 to 5 parts by mass, and more preferably from 0.1 to 3 parts by mass.

The first layer may further contain commonly used additives given as examples in the section on the second layer. Because the first layer has high adhesiveness even when the first layer does not contain a chlorine-containing resin, the first layer preferably contains no chlorine-containing resin and, in particular, the first layer preferably contains substantially no halogen compounds or halogen elements, and more preferably contains no halogen compounds or halogen elements.

The proportion of the acid-modified olefin-based resin in the first layer is, for example, 70 mass% or greater, preferably 80 mass% or greater, and more preferably 90 mass% or greater (e.g., 90 to 98 mass%), and may be 100 mass% (acid-modified olefin-based resin alone).

An average thickness of the first layer may be 20 µm or less and, for example, approximately from 0.01 to 10 µm (e.g., 0.03 to 5 µm), preferably from 0.05 to 3 µm (e.g., 0.1 to 2 µm), and more preferably from 0.15 to 1 µm (particularly, 0.2 to 0.5 µm). When the second layer is thin, excellent ease of handling and suitability for a roll-to-roll method are achieved, and economical efficiency is also improved. Note that the average thickness can be calculated based on an applied amount (solid content weight per unit area) and density of the first layer.

### Substrate Layer

The layered film of the present disclosure further includes a substrate layer. For example, from the perspective of improving dimensional stability of the layered film used as a release film in a production process of a fuel battery and, in particular, from the perspective of suppressing elongation even when tension is applied by a roll-to-roll method, maintaining high dimensional stability even when exposed to a high temperature in a drying process or thermal press bonding treatment, and suppressing release from the ion-exchange resin-containing layer such as an electrolyte membrane and an electrode membrane, the substrate layer is preferably formed of a material having high heat resistance and high dimensional stability and, specifically, may be formed of a synthetic resin having a modulus of elasticity at 150°C of 100 to 1000 MPa. The modulus of elasticity is, for example, approximately from 120 to 1000 MPa, preferably from 150 to 1000 MPa, and more preferably from 200 to 1000 MPa. When the modulus of elasticity is too small, dimensional stability of the layered film decreases, and release of the second layer as a release layer from the ion-exchange resin-containing layer may occur in production by a roll-to-roll method, and thus productivity of a fuel battery may decrease.

As such a synthetic resin, for example, various thermoplastic resins and thermosetting resins can be used, and from the perspective of achieving flexibility that allows production by a roll-to-roll method, thermoplastic resins are preferred. Examples of the thermoplastic resin include polyolefins (e.g., polypropylene-based resins and cyclic polyolefins), polyvinyl alcohol-based polymers, polyesters, polyamides, polyimides, polycarbonates, polyphenylene ethers, polyphenylene sulfides, and cellulose derivatives (cellulose esters such as cellulose acetate). These thermoplastic resins can be used alone or in a combination of two or more. In the present disclosure, because the intermediate layer has excellent adhesiveness to the substrate layer, these thermoplastic resins preferably have substantially no reactive groups and substantially no polar groups (e.g., a side chain formed of a reactive group) to improve adhesiveness. Among these thermoplastic resins, at least one type selected from the group consisting of polyolefins, polyvinyl alcohol-based polymers, polyesters, polyamides, polyimides, and cellulose derivatives (especially, at least one type selected from the group consisting of polyolefins, polyesters, polyimides, and cellulose esters) are preferred, and from the perspective of excellent balance between heat resistance and flexibility, polyesters and polyimides are particularly preferred. Furthermore, as the polyester, poly C₂₋₄ alkylene arylate-based resins such as polyethylene terephthalate (PET) and polyethylene naphthalate (PEN) can be preferably used. Examples of the polyimide include thermoplastic polyimide, polyetherimide, and polyamide-imide.

The substrate layer may be formed of a stretched film from the perspective of improving film strength of the layered film. The stretching may be uniaxial stretching but, from the perspective of capability of improving film strength, biaxial stretching is preferred. The stretching ratio in each of length and width directions may be, for example, 1.5 times or greater (e.g., 1.5 to 6 times), and is approximately preferably from 2 to 5 time, and more preferably from 3 to 4 times. When the stretching ratio is too small, the film strength tends to be insufficient.

The substrate layer also may contain commonly used additives given as examples in the section on the second layer. A proportion of the synthetic resin in the substrate layer may be, for example, 80 mass% or greater, preferably 90 mass% or greater, and more preferably 95 mass% or greater (e.g., 95 to 100 mass%).

The substrate layer surface needs to be sufficiently smooth enough for formation of the first layer and the second layer by coating and the degree of the surface smoothness is not particularly limited. The arithmetic average roughness Ra of the substrate layer surface in accordance with JIS B 0601 may be approximately 1 µm or less, and preferably 100 nm or less (e.g., 10 to 100 nm).

The surface of the substrate layer may be subjected to surface treatment to improve adhesiveness to the first layer. Examples of the surface treatment include commonly used surface treatments such as corona discharge treatment, flame treatment, plasma treatment, and irradiation treatment with ozone or ultraviolet radiation. Among these, corona discharge treatment is preferred.

The substrate layer may include an easily adhesive layer which is formed by a commonly used adhesive resin (e.g., in a case where the substrate layer is a polyester resin, easily adhesive layer formed of an adhesive resin such as a low molecular weight polyester resin, an aliphatic polyester resin, or an amorphous polyester resin). In the present disclosure, because the first layer is highly adhesive, the substrate layer may not need to have an easily adhesive layer. Thus, in the present disclosure, use of a substrate layer that does not have an easily adhesive layer simplifies the layer structure of the layered film, and makes the layered film thin.

An average thickness of the substrate layer is, for example, approximately from 1 to 300 µm, preferably from 5 to 200 µm, and more preferably from 10 to 100 µm (particularly, 20 to 80 µm). When the thickness of the substrate layer is too large, production by a roll-to-roll method becomes difficult, and when the substrate layer is too thin, dimensional stability and ease of transport in a roll-to-roll method decrease, and wrinkles may be formed.

### Ion-Exchange Resin-Containing Layer

The layered film of the present disclosure includes an ion-exchange resin-containing layer that is layered on the second layer and that includes an ion-exchange resin. The ion-exchange resin-containing layer may be an ion-exchange resin-containing layer serving as a transfer medium that is transferred when the second layer is used as a release layer, the second layer having been formed on the substrate layer with the first layer interposed between the substrate layer and the second layer. That is, the ion-exchange resin-containing layer may be a transfer medium that is to be transferred by the release film, in which the second layer is layered on the substrate layer with the first layer interposed between the substrate layer and the second layer.

As the ion-exchange resin, a commonly used ion-exchange resin utilized for a fuel cell can be used. In particular, a cation exchange resin such as a strongly acidic cation exchange resin or a slightly acidic cation exchange resin is preferred, and examples thereof include an ion-exchange resin containing a sulfonic acid group, a carboxyl group, a phosphoric acid group, a phosphonic acid group, or salts of these (in detail, an ion-exchange resin containing, as an electrolytic group having an electrolytic function, a sulfonic acid group, a carboxyl group, a phosphoric acid group, a phosphonic acid group, or salts of these). An ion-exchange resin containing a sulfonic acid group or salt thereof (an ion-exchange resin containing a sulfonic acid group or salt thereof as an electrolytic group) is particularly preferred.

As the ion-exchange resin containing a sulfonic acid group, various resins containing a sulfonic acid group or salt thereof can be used. Examples of the various resins include polyolefin such as polyethylene and polypropylene, a (meth)acrylic resin, a styrene-based resin, polyacetal, polyester, polycarbonate, polyamide, polyamide-imide, polyimide, polyether, polyetherimide, polyetherketone, polyether ether ketone, polysulfone, polyethersulfone, polyphenylene sulfide, and a fluororesin.

Among the ion-exchange resin containing a sulfonic acid group or salt thereof, for example, a fluorine resin containing a sulfonic acid group or salt thereof and a sulfonated product of a crosslinked polystyrene are preferred, and a polystyrene-graft-polyethylene tetrafluoroethylene copolymer or polystyrene-graft-polytetrafluoroethylene copolymer containing a sulfonic acid group or salt thereof may be employed. Among these, for example, from the perspective of releasability, a fluorine resin containing a sulfonic acid group or salt thereof (e.g., fluorohydrocarbon resin, in which at least some hydrogen atoms are replaced with fluorine atoms) is particularly preferred. In particular, in a solid polymer-type fuel battery, a fluorine resin containing a sulfonic acid group (or -CF₂CF₂SO₃H group) or salt thereof in a side chain, such as a copolymer of [2-(2-sulfotetrafluoroethoxy)hexafluoropropoxy]trifluoroethylene and tetrafluoroethylene (e.g., block copolymer) is preferably used.

An ion-exchange capacity of the ion-exchange resin may be 0.1 meq/g or greater and is, for example, approximately from 0.1 to 2.0 meq/g, preferably from 0.2 to 1.8 meq/g, and more preferably from 0.3 to 1.5 meq/g (particularly, 0.5 to 1.5 meq/g).

As such an ion-exchange resin, a commercially available product such as "registered trademark: Nafion", available from DuPont, can be used. Note that, as the ion-exchange resin, for example, an ion-exchange resin described in JP 2010-234570 A may be used.

The ion-exchange resin-containing layer may be an electrolyte membrane formed of the ion-exchange resin, or an electrode membrane containing the ion-exchange resin and catalyst particles. In particular, in a case where the layered film is for producing a solid polymer-type fuel battery, the layered film may include: a layered material prepared by layering a first layer and a second layer (release layer) on a substrate layer, this layered material serving as a release film; and an ion-exchange resin-containing layer (electrolyte membrane, electrode membrane, membrane electrode assembly) containing an ion-exchange resin and being tightly attached to the release layer.

In the electrode membrane (catalyst layer or electrode catalyst membrane), the catalyst particle contains a metallic component having a catalytic action (particularly, a pure noble metal such as platinum (Pt), or an alloy containing the noble metal). Typically, in an electrode membrane for a cathode, the catalyst particle contains platinum, and in an electrode membrane for an anode, the catalyst particle contains a platinum-ruthenium alloy. Furthermore, the catalyst particle is typically prepared as a composite particle having the metallic component supported on a conductive material (e.g., a carbon material such as carbon black). In the electrode membrane, a proportion of the ion-exchange resin is, for example, approximately from 5 to 300 parts by mass, preferably from 10 to 250 parts by mass, and more preferably from 20 to 200 parts by mass, with respect to 100 parts by mass of the catalyst particles.

The ion-exchange resin-containing layer may also contain commonly used additives given as examples in the section on the second layer. For example, the ion-exchange resin-containing layer may contain an inorganic material such as an inorganic particle or an inorganic fiber (e.g., carbonaceous material, glass, and ceramics).

In a case where the second layers are formed on both faces of the substrate layer, the ion-exchange resin-containing layer is formed on at least one face of the second layer (release layer) and may be formed on both faces of the release layer or may be formed on one face of the second layer.

An average thickness of the ion-exchange resin-containing layer is, for example, approximately from 1 to 500 µm, preferably from 1.5 to 300 µm, more preferably from 2 to 100 µm, even more preferably from 3 to 50 µm, and most preferably from 5 to 30 µm.

An average thickness of the electrolyte membrane is, for example, approximately from 1 to 500 µm, preferably from 2 to 300 µm, more preferably from 3 to 100 µm, even more preferably from 5 to 50 µm, and most preferably from 8 to 30 µm.

An average thickness of the electrode membrane is, for example, approximately from 1 to 100 µm, preferably from 2 to 80 µm, more preferably from 2 to 50 µm, and even more preferably from 3 to 30 µm.

### Characteristic of Layered Film

In the layered film of the present disclosure, the second layer is layered on at least one face of the substrate layer with the first layer being interposed between the substrate layer and the second layer; because the second layer can be formed on the substrate layer by coating, the second layer that is thin and uniform can be formed.

Because the layered film of the present disclosure has excellent releasability and has adequate adhesiveness and releasability to the ion-exchange resin-containing layer, the layered film can be used for a layered film that can produce a membrane electrode assembly (MEA) of a solid polymer-type fuel battery and a hydrogen feeder and can be preferably used for a film for producing an MEA by layering thereon the electrolyte membrane and/or electrode membrane containing the ion-exchange resin and then being released from the MEA.

### Method for Producing Layered Film

The layered film of the present disclosure is produced by: first layer formation of forming a first layer including applying a liquid composition for a first layer on a substrate layer by coating (or flow casting), the liquid composition containing an acid-modified olefin-based resin; second layer formation of forming a second layer including applying a liquid composition for a second layer on the obtained first layer by coating, the liquid composition containing a cyclic olefin-based resin; and ion-exchange resin-containing layer formation of forming an ion-exchange resin-containing layer on the obtained second layer.

### First Layer Formation

In the first layer formation, the liquid composition for the first layer (coating agent) may contain a solvent in addition to the components for forming the first layer described above. The solvent may be a hydrophobic solvent; however, from the perspective of ease of handling, an aqueous solvent is preferred. In a case where the solvent is an aqueous solvent, the liquid composition for the first layer may be an aqueous emulsion.

Examples of the aqueous solvent include water; alcohols such as ethanol, isopropanol, butanol, and cyclohexanol; and ketones such as acetone. These aqueous solvents can be used alone or in a combination of two or more. Among these, a solvent containing water as a main component is preferred, and a mixed solvent of water and C₁₋₄ alkanol is particularly preferred.

In a case where the aqueous solvent is a mixed solvent of water and C₁₋₄ alkanol (particularly, C₂₋₃ alkanol such as isopropanol), the proportion of the C₁₋₄ alkanol may be 100 parts by mass or less with respect to 100 parts by mass of the water and is, for example, approximately from 5 to 80 parts by mass, preferably from 10 to 50 parts by mass, and more preferably from 12 to 40 parts by mass.

A solid content concentration (active component concentration) in the liquid composition for the first layer is, for example, approximately from 1 to 50 mass%, preferably from 5 to 40 mass%, and more preferably from 10 to 30 mass% (particularly, 15 to 25 mass%). A proportion of the aqueous solvent can be selected from, for example, a range of approximately 100 to 1000 parts by mass with respect to 100 parts by mass of the acid-modified olefin-based resin.

Examples of the coating method include commonly used methods such as a roll coater, an air knife coater, a blade coater, a rod coater, a reverse coater, a bar coater, a comma coater, a die coater, a gravure coater, a screen coater method, a spray method, and a spinner method. Among these methods, methods such as the blade coater method, the bar coater method and the gravure coater method are widely used.

Drying may be natural drying, but the solvent may be evaporated by heating to dryness. The drying temperature may be 50°C or higher and is, for example, approximately from 50 to 200°C, preferably from 60 to 150°C, and more preferably from 80 to 120°C.

### Second Layer Formation

In the second layer formation, the liquid composition for the second layer (coating agent) may contain a solvent in addition to the components for forming the second layer described above.

Examples of the solvent include water; alcohols such as ethanol, isopropanol, butanol, and cyclohexanol; ketones such as acetone, methyl ethyl ketone, methyl isobutyl ketone, and cyclohexanone; ethers such as diethyl ether, diisopropyl ether, dioxane, and tetrahydrofuran; cellosolves such as methyl cellosolve and ethyl cellosolve; cellosolve acetates; esters such as methyl acetate, ethyl acetate, and butyl acetate; aliphatic hydrocarbons such as hexane; alicyclic hydrocarbons such as cyclohexane; aromatic hydrocarbons such as toluene and xylene; halogenated hydrocarbons such as dichloromethane and dichloroethane; and aromatic oils such as solvent naphtha. These solvents can be used alone, or two or more thereof can be used in combination. Among these, from the perspectives of achieving excellent ease of handling and solubility, aromatic hydrocarbons such as toluene are preferred.

A solid content concentration (active component concentration) in the liquid composition for the second layer is, for example, approximately from 1 to 50 mass%, preferably from 2 to 30 mass%, and more preferably from 3 to 20 mass% (particularly, 5 to 15 mass%). A proportion of the aqueous solvent is, for example, approximately from 300 to 2000 parts by mass, preferably from 500 to 1500 parts by mass, and more preferably from 800 to 1200 parts by mass, with respect to 100 parts by mass of the cyclic olefin-based resin.

The coating method and drying method are the same as the coating method and drying method of the first layer forming, and the preferred aspects are also the same.

In the present disclosure, with a substrate layer having excellent flexibility the layered film can be produced by a roll-to-roll method, and productivity can be improved.

### Ion-Exchange Resin-Containing Layer Formation

In the ion-exchange resin-containing layer formation, as the layering method of the ion-exchange resin-containing layer, typically, a method of coating a liquid composition for the ion-exchange resin-containing layer is employed.

To form the ion-exchange resin-containing layer by coating (or flow casting), the liquid composition for the ion-exchange resin-containing layer is supplied to coating in a state of a solution or dispersion, in which the ion-exchange resin (or the ion-exchange resin and catalyst particles) are dissolved or dispersed in a solvent.

Examples of the solvent include water, alcohols (e.g., C₁₋₄ alkanol such as methanol, ethanol, isopropanol, and 1-butanol), ketones (e.g., acetone and methyl ethyl ketone), ethers (e.g., dioxane and tetrahydrofuran), and sulfoxides (e.g., dimethyl sulfoxide). These solvents can be used alone, or two or more thereof can be used in combination. Among these solvents, from the perspective of ease of handling and the like, water and mixed solvents of water and C₁₋₄ alkanol are widely used. A concentration of the solute or solid content (ion-exchange resin, catalyst particles) of the solution or dispersion is, for example, approximately from 1 to 80 mass%, preferably from 2 to 60 mass%, and more preferably from 3 to 50 mass%.

Examples of the coating method include commonly used methods given as examples in the first layer formation. Among these methods, the blade coater method, the bar coater method and the like are widely used.

The solvent may be vaporized by being heated and dried after the solution containing the ion-exchange resin (and catalyst particles) is coated. The drying temperature may be 50°C or higher. For the electrolyte membrane, the drying temperature is, for example, approximately from 80 to 200°C (particularly, 100 to 150°C). For the electrode membrane, the drying temperature is, for example, approximately from 50 to 150°C (particularly, 60 to 120°C).

### Method for Producing Membrane Electrode Assembly

In a case where the layered film of the present disclosure is used in production of a membrane electrode assembly, for example, an electrolyte membrane may be layered on a release layer (second layer) of a first release film (release film in which the second layer is layered on a substrate layer with a first layer being interposed between the second layer and the substrate layer) by coating and the first layered film may be produced in which the electrolyte membrane is layered on the first release film; and an electrode membrane may be layered on a release layer of a second release film by coating and a second layered film may be produced in which the electrode membrane is layered on the second release film.

The produced first and second layered films are typically supplied to bonding; however, in a case of continuous production, before the bonding and in the ion-exchange resin-containing layer formation, the first and second layered films are typically transported to a place where the bonding is performed.

In the present disclosure, because the layered films have excellent flexibility, a roll-to-roll method can be employed in the ion-exchange resin-containing layer formation, together with such transportation, and productivity can be improved. Furthermore, because excellent dimensional stability of the layered film is achieved by the combination of the second layer (release layer) and the substrate layer, elongation of the layered film due to tension can be suppressed even in the roll-to-roll method. Thus, the layered films can be wound in a roll form without the ion-exchange resin-containing layer being released, and productivity can be improved.

The obtained layered film may be supplied to bonding. In the boding, a membrane electrode assembly is prepared by tightly bonding the electrolyte membrane and the electrode membrane, which have been separately layered on the release layers of the first and second release films.

The bonding between the electrolyte membrane and the electrode membrane is typically performed by thermal press bonding. The heating temperature is, for example, approximately from 80 to 250°C, preferably from 90 to 230°C, and more preferably from 100 to 200°C. The pressure is, for example, approximately from 0.1 to 20 MPa, preferably from 0.2 to 15 MPa, and more preferably from 0.3 to 10 MPa.

The composite (the layered material in which the electrolyte layer and electrode membrane are tightly adhered) tightly bonded in the bonding is supplied to releasing of releasing layers (the first and second release films) from the rest of the layered films, that is, the ion-exchange resin-containing layers (the electrolyte membrane and/or the electrode membrane), and thus a membrane electrode assembly of a solid polymer-type fuel battery can be obtained. In the present disclosure, because even a layered material that has undergone drying treatment and/or thermal press bonding treatment in the ion-exchange resin-containing layer formation described above can achieve adequate peel strength, the ion-exchange resin-containing layer is not released from the release film in the layering and/or bonding in the ion-exchange resin-containing layer formation, and the release film can be easily released in the releasing, and thus workability can be improved.

Furthermore, similarly to the bonding and the releasing described above, to the electrolyte membrane, from which the first release film has been released, another electrode membrane (electrode membrane for a cathode in a case where the second release film is an electrode membrane for an anode) of another layered material, in which the electrode membrane is layered on a release layer of a third release film, can be tightly bonded and then the release film is released. Then, a fuel gas feeder layer and an air feeder layer are layered on the electrode membranes by a commonly used method, and thus a membrane electrode assembly (MEA) can be obtained.

Furthermore, an MEA in which electrode membranes are layered on both faces of an electrolyte membrane may be produced by, after the first layered film including the first electrode membrane and the second layered film including the second electrode membrane are tightly bonded on each side of the electrolyte membrane in a manner that the electrolyte membrane and the electrode membranes are in close contact, releasing the release film.

Each aspect disclosed in the present specification can be combined with any other feature disclosed herein.

### Examples

Hereinafter, the present disclosure is described in greater detail based on examples, but the present disclosure is not limited to these examples. The characteristics of the layered films obtained in the examples and comparative examples were evaluated by the following methods.

### Used Raw Material

Acid-modified olefin-based resin: "Arrowbase SE-1205J2", available from Unitika Ltd.
Polyester-based coating agent: polyester resin water dispersion, "PESRESIN A-647GEX", available from Takamatsu Oil & Fat Co., Ltd.
Hydroxy group-containing polyolefin-based coating agent: polyhydroxy polyolefin oligomer, "POLYTAIL H", available from Mitsubishi Chemical Corporation.
UV curable coating agent: "FA-3291", available from Nippon Kako Toryo Co., Ltd.
Cyclic olefin-based copolymer A: "TOPAS (registered trademark) 6013", available from Polyplastics Co., Ltd.; glass transition temperature: 138°C

### Cyclic olefin-based copolymer B: copolymer synthesized by the following method Synthetic Method of Cyclic Olefin-Based Copolymer B

After a dried 300 mL two-necked flask was purged with a nitrogen gas, 8.1 mg of dimethylanilinium tetrakis(pentafluorophenyl)borate, 235.7 mL of toluene, 7.0 mL of a toluene solution containing norbornene in a concentration of 7.5 mol/L, 6.7 mL of 1-octene, and 2 mL of triisobutylaluminum were charged, and the reaction solution was maintained at 25°C. Separately from this solution, in a glove box, 92.9 mg of (t-butylamido)dimethyl-9-fluorenylsilane dimethyltitanium [(t-BuNSiMe2Flu)TiMe2] was charged in a flask as a catalyst and dissolved in 5 mL of toluene. Polymerization was initiated by adding 2 mL of this catalyst solution into the 300 mL flask. The reaction was terminated by adding 2 mL of methanol after 2 minutes. Then, the obtained reaction mixture was discharged into a large amount of methanol which had been adjusted to be acidic using hydrochloric acid and a precipitate was separated. The precipitate was filtered, washed and then dried, and thus 6.5 g of a 2-norbornene-1-octene copolymer (cyclic olefin-based copolymer B) was obtained. The number average molecular weight Mn of the obtained copolymer was 73200, the glass transition temperature Tg was 265°C, the dynamic storage modulus (E') had a transition point around -20°C, and the composition (molar ratio) of the 2-norbornene and 1-octene was the former/the latter = 85/15.

### Cyclic olefin-based copolymer C: copolymer synthesized by the following method Synthetic Method of Cyclic Olefin-Based Copolymer C

4.3 g of 2-norbornene-1-hexene copolymer (cyclic olefin copolymer C) was obtained in the same manner as in the synthesis method of the cyclic olefin-based copolymer B except that 1-hexane was used in place of 1-octane and the blended amount was 4.8 mL. The Mn of the obtained copolymer was 31600, the Tg was 300°C, the dynamic storage modulus (E') had a transition point around -20°C, and the composition (molar ratio) of the 2-norbornene and 1-hexene was the former/the latter = 88/12.

Polyester film: biaxially stretched polyethylene terephthalate film, "Polyester Film EMBLET (registered trademark) S50", available from Unitika Ltd.; thickness: 50 µm; no easily adhesive layer
PTFE film: "NITOFLON", available from Nitto Denko Corporation
Ion-exchange resin dispersion: water-alcohol dispersion of a perfluoro polymer having a sulfonic acid group in a side chain, "Nafion (registered trademark) DE2020CS type", available from DuPont; solid content: 20 mass%
Ion-exchange resin membrane: a perfluoro polymer membrane having a sulfonic acid group in a side chain, "Nation (registered trademark) 112", available from DuPont; membrane thickness: approximately 50 µm
Pt on carbon: TEC10E50E, available from TANAKAKikinzoku Kogyo K.K.

### Average Thickness

Based on the weight difference before and after coating, the applied amount was determined. Based on the specific gravity of the resin, the thickness of the coated film was determined.

### Releasability

When the release film was released from the obtained layered material, occurrence of transfer of the second layer (release layer) onto the released material was checked and evaluated based on the following criteria.

Good: The release layer was not transferred onto the released material
Poor: The release layer was transferred onto the released material

### Example 1

### Preparation of Coating Liquid for First Layer

A coating liquid for a first layer was obtained by diluting the acid-modified olefin-based resin to a solid content concentration of 10 mass%.

### Preparation of Coating Liquid for Second Layer

A coating liquid having a solid content concentration of 10 mass% was obtained by dissolving the cyclic olefin-based copolymer A in toluene by agitation.

### Production of Layered Film

The coating liquid for the first layer was applied on a polyester film by a Meyer bar coating method and dried at a temperature of 100°C for 2 minutes, and thus a first layer was formed. On the obtained first layer, the coating liquid for the second layer was applied by a Meyer bar coating method and dried at a temperature of 100°C for 1 minute, and thus a second layer was formed. Furthermore, an ion-exchange resin dispersion was prepared, the solution was casted on the second layer by using a Meyer bar, and the coated film was dried in an oven at 100°C. Thus, an ion-exchange resin-containing layer (electrolyte membrane) was formed. Thereafter, heat treatment was further performed in an oven at 130°C for 30 minutes, and thus a layered film A was obtained. The average thickness of the first layer was approximately 0.3 µm, the average thickness of the second layer was 0.6 µm, and the thickness of the electrolyte membrane was approximately 10 µm.

By a ball mill, 7 parts by mass of Pt on carbon and 35 parts by mass of the ion-exchange resin dispersion were mixed to form a coating liquid for an electrode membrane (catalyst layer for electrode). The coating liquid for the electrode membrane was applied onto a PTFE film by using a doctor blade and then dried at 130°C for 5 minutes, and thus a layered film B, in which an electrode membrane of approximately 10 µm was formed, was produced.

The layered film A and the layered film B were subjected to hot pressing at 140°C at 5 MPa for approximately 1 minute while the electrolyte membrane and the electrode membrane were in contact, and then the release film (layer except the electrolyte membrane) of the layered film A was released.

### Example 2

The coating liquid for the first layer was applied on a polyester film by a Meyer bar coating method and dried at a temperature of 100°C for 2 minutes, and thus a first layer was formed. On the obtained first layer, the coating liquid for the second layer was applied by a Meyer bar coating method and dried at a temperature of 100°C for 1 minute, and thus a second layer was formed. By a ball mill, 7 parts by mass of Pt on carbon and 35 parts by mass of the ion-exchange resin dispersion were mixed to form a coating liquid for an electrode membrane (catalyst layer for electrode). The coating liquid for the electrode membrane was applied onto the second layer by using a doctor blade and then dried at 130°C for 5 minutes, and thus a layered film C, in which an electrode membrane of approximately 10 µm was formed, was obtained. The average thickness of the first layer was approximately 0.3 µm, the average thickness of the second layer was 0.6 µm, and the thickness of the electrode membrane was approximately 10 µm.

Then, using the ion-exchange resin membrane as an electrolyte membrane, the ion-exchange resin membrane and the electrode membrane of the obtained layered film C were brought into contact and subjected to hot pressing at 140°C at 5 MPa for approximately 1 minute. The release film (layer except the electrode membrane) of the layered film C was released.

### Example 3

A layered film was produced in the same manner as in Example 1 except for using a cyclic olefin-based copolymer B in place of the cyclic olefin-based copolymer A as the coating liquid for the second layer, and the release film was released.

### Example 4

A layered film was produced in the same manner as in Example 2 except for using a cyclic olefin-based copolymer B in place of the cyclic olefin-based copolymer A as the coating liquid for the second layer, and the release film was released.

### Example 5

A layered film was produced in the same manner as in Example 1 except for using a cyclic olefin-based copolymer C in place of the cyclic olefin-based copolymer A as the coating liquid for the second layer, and the release film was released.

### Example 6

A layered film was produced in the same manner as in Example 2 except for using a cyclic olefin-based copolymer C in place of the cyclic olefin-based copolymer A as the coating liquid for the second layer, and the release film was released.

### Comparative Example 1

A layered film was produced in the same manner as in Example 1 except for forming a second layer but forming no first layer, and the release film was released.

### Comparative Example 2

A layered film was produced in the same manner as in Example 2 except for forming a second layer but forming no first layer, and the release film was released.

### Comparative Example 3

A layered film was produced in the same manner as in Example 1 except for using a coating liquid obtained by diluting the polyester-based coating agent to a solid content concentration of 10 mass% as the coating liquid for the first layer, and the release film was released.

### Comparative Example 4

A layered film was produced in the same manner as in Example 1 except for using a coating liquid obtained by diluting the hydroxy group-containing polyolefin-based coating agent to a solid content concentration of 10 mass% as the coating liquid for the first layer, and the release film was released.

### Comparative Example 5

### Preparation of Coating Liquid for First Layer

A coating liquid for the first layer was obtained by diluting the UV curable coating agent to a solid content concentration of 10 mass%.

### Production of Layered Film

The coating liquid for the first layer was applied on a polyester film by a Meyer bar coating method and dried at a temperature of 100°C for 1 minute, and then irradiation of 500 mJ/cm² was performed by using a high pressure mercury lamp. Thus, a first layer was formed. The process thereafter (formation of the second layer and following process) was performed in the same manner as in Example 1, thus a layered film was produced, and the release film was released.

The results of evaluation of the releasability of the layered films obtained in examples and comparative examples are shown in Table 1.

### [Table 1]

**Table 1**

| | Releasability |
|---|---|
| Example 1 | Good |
| Example 2 | Good |
| Example 3 | Good |
| Example 4 | Good |
| Example 5 | Good |
| Example 6 | Good |
| Comparative Example 1 | Poor |
| Comparative Example 2 | Poor |
| Comparative Example 3 | Poor |
| Comparative Example 4 | Poor |
| Comparative Example 5 | Poor |

As is clear from the results in Table 1, the layered films obtained in the examples achieved excellent releasability without use of raw materials with a large environmental load, such as those including halogen elements.

### Industrial Applicability

Because the layered film of the present disclosure has excellent releasability, the layered film can be used as a release film for various fields, such as food, pharmaceuticals, chemicals, optical components, and electrical and electronic raw materials. For example, the layered film can be used as a release film for a polymer layer. In particular, because the layered film has adequate releasability from an ion-exchange resin-containing layer, the layered film can be used for a release film to produce a membrane electrode assembly (MEA) of a solid polymer-type fuel battery and, in particular, can be preferably used for a film for producing an MEA by layering thereon an electrolyte membrane and/or electrode membrane containing an ion-exchange resin and then being released from the MEA.

## Claims

1. A layered film comprising: a base material layer, a first layer, a second layer, and a ion-exchange resin-containing layer in this order; the first layer containing an acid-modified olefin-based resin, the second layer containing a cyclic olefin-based resin, and the ion-exchange resin-containing layer containing an ion-exchange resin.

2. The layered film according to claim 1, wherein the acid-modified olefin-based resin is an acid-modified polyethylene-based resin.

3. The layered film according to claim 1 or 2, wherein the cyclic olefin-based resin is a copolymer of a cyclic olefin and a linear olefin.

4. The layered film according to any one of claims 1 to 3, wherein an average thickness of the second layer is 30 µm or less.

5. The layered film according to any one of claims 1 to 4, wherein the substrate layer contains at least one type selected from the group consisting of a polyolefin, polyvinyl alcohol-based polymer, polyester, polyamide, polyimide, and cellulose derivative.

6. The layered film according to any one of claims 1 to 5, wherein the first layer further contains a basic compound.

7. The layered film according to any one of claims 1 to 6, wherein the ion-exchange resin is a fluorine resin having a sulfonic acid group or a salt thereof in a side chain, and the ion-exchange resin-containing layer is an electrolyte membrane and/or an electrode membrane.

8. A method for producing the layered film described in any one of claims 1 to 7, the method comprising:
forming a first layer, the forming the first layer including coating a liquid composition for the first layer on a substrate layer to form an intermediate layer, the liquid composition containing an acid-modified olefin-based resin;
forming a second layer, the forming the second layer including coating a liquid composition for the second layer on the coated first layer to form the second layer, the liquid composition containing a cyclic olefin-based resin; and
forming an ion-exchange resin-containing layer, the forming the ion-exchange resin-containing layer including layering the ion-exchange resin-containing layer on the coated second layer.

9. The production method according to claim 8, wherein the liquid composition for a first layer is an aqueous emulsion.

10. The production method according to claim 8 or 9, wherein the production is performed by a roll-to-roll method.

11. A method for producing a membrane electrode assembly of a solid polymer-type fuel battery, the method comprising releasing a layer other than an ion-exchange resin-containing layer from the layered film described in any one of claims 1 to 7.
